(19) **Europäisches Patentamt**
**European Patent Office**
**Office européen des brevets**

(11) **EP 4 064 445 A1**

(12) # EUROPEAN PATENT APPLICATION

(43) Date of publication:
**28.09.2022  Bulletin 2022/39**

(21) Application number: **22162587.4**

(22) Date of filing: **16.03.2022**

(51) International Patent Classification (IPC):
*H01M 50/446* (2021.01)      *H01M 50/449* (2021.01)
*H01M 50/451* (2021.01)      *H01M 50/457* (2021.01)

(52) Cooperative Patent Classification (CPC):
**H01M 50/446; H01M 50/449; H01M 50/451;
H01M 50/457**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2021  KR 20210037458**

(71) Applicants:
• **SK Innovation Co., Ltd.
Seoul 03188 (KR)**

• **SK ie technology Co., Ltd.
Jongno-gu
Seoul
03188 (KR)**

(72) Inventors:
• **JI, Sang Yoon
34124 Daejeon (KR)**
• **KIM, Yun Bong
34124 Daejeon (KR)**
• **LEE, Dong Yeon
34124 Daejeon (KR)**

(74) Representative: **Stolmár & Partner
Patentanwälte PartG mbB
Blumenstraße 17
80331 München (DE)**

(54) **COMPOSITE SEPARATOR AND ELECTROCHEMICAL DEVICE USING THE SAME**

(57)    The present disclosure relates to a novel organic/inorganic composite porous separator that has excellent thermal stability and an excellent adhesive property between a porous substrate and a porous active layer, has a small change in Gurley permeability before and after coating of the porous active layer, and has excellent electrochemical stability, excellent lithium ion conductivity, and a low resistance increase rate in comparison to a polyolefin-based separator according to the related art, and an electrochemical device capable of implementing both securing of safety and performance improvement by including the separator.

EP 4 064 445 A1

## Description

### TECHNICAL FIELD

The following disclosure relates to a separator and an electrochemical device using the same. More particularly, the following disclosure relates to a novel porous organic/inorganic composite separator that has excellent thermal stability and an excellent adhesive property between a porous substrate and a porous active layer, has a small change in Gurley permeability before and after coating of the porous active layer, and has excellent electrochemical stability, excellent lithium ion conductivity, and a low resistance increase rate in comparison to a polyolefin-based separator according to the related art, and an electrochemical device capable of implementing both securing of safety and performance improvement by including the composite separator.

### BACKGROUND

Recently, in accordance with a high capacity and a large size of a secondary battery for application in an electric vehicle or the like, it is significantly important to secure safety of the battery.

In order to prevent ignition of the battery caused by a forced internal short circuit due to an external impact for securing the safety, a ceramic layer (an active layer) containing inorganic particles or inorganic particles and organic particles is introduced onto a polyolefin porous sheet or the like, such that the safety of the battery is secured. Such a battery having safety is being commercialized.

However, when the ceramic layer is introduced onto the polyolefin porous sheet or the like, a polymer binder is used for adhesion of the ceramic layer to the porous sheet or connection and fixation between the inorganic particles. The polymer binder is an organic binder, and a chemical reaction occurs between the organic binder and an electrolyte solution of the battery, the organic binder is dissolved and diluted in the electrolyte solution, or the organic binder is swollen due to the electrolyte solution. When such a chemical reaction, elution, or swelling occurs, there are various problems that cause deterioration of the performance of the battery, such as deterioration of the performance of the electrolyte solution due to clogging of pores of the porous sheet, generation of gas, or elution, and an increase in volume of the battery due to swelling.

### SUMMARY

As a result of conducting intensive studies to solve the above problems, it was found that in a case of a composite separator obtained by forming an inorganic particle layer that contains inorganic particles or particles including inorganic particles and an organic binder on one or both surfaces of a porous substrate, and stacking a multi-dimensional heterogeneous material-containing composite layer on an upper portion of the inorganic particle layer, the composite layer being produced by mixing inorganic particles or particles including inorganic particles with a one-dimensional inorganic material and then performing coating and drying, a novel separator having sufficient adhesive strength or more excellent adhesive strength may be provided without using a polymer organic binder having insufficient chemical stability.

An embodiment of the present disclosure is directed to providing a novel separator that is obtained without using an organic binder, prevents a change in performance of a battery over time, and is more permanently and chemically stable, by using inorganic nanowires as a binder as described above.

Another embodiment of the present disclosure is directed to providing a separator for a secondary battery that has more excellent heat resistance.

Still another embodiment of the present disclosure is directed to providing a novel separator that may significantly improve electrical characteristics such as a capacity retention rate of a secondary battery because lithium ions smoothly migrate by completely or sufficiently preventing clogging of porous pores by an organic binder or elution of the organic binder into an electrolyte solution.

Still another embodiment of the present disclosure is directed to providing a separator that implements more excellent dimensional stability of a battery against a high capacity and a large size of the battery, and has the effect of further improving the safety of the battery with almost no deviation in thickness even after long-term use of a battery in which hundreds of layers are stacked.

Still another embodiment of the present disclosure is directed to providing an electrochemical device having excellent performance, and particularly, to a lithium secondary battery.

In one general aspect, a composite separator includes:

a porous substrate (a);
an inorganic particle layer (b) that is formed on one or both surfaces of the porous substrate and contains particles including inorganic particles and an organic binder; and

a multi-dimensional heterogeneous material-containing composite layer (c) that is formed on an upper surface of the inorganic particle layer and contains inorganic particles or particles including inorganic particles (A) and a one-dimensional inorganic material (B).

In an exemplary embodiment, the inorganic particles or the particles including inorganic particles (A) may be inorganic particles alone or mixed particles of inorganic particles and organic particles. Alternatively, the inorganic particles may be contained alone, or the inorganic particles may be contained in an excessive amount relative to organic particles.

That is, the multi-dimensional heterogeneous material-containing composite layer may contain inorganic particles and a one-dimensional inorganic material, or may contain inorganic particles, organic particles, and a one-dimensional inorganic material.

The multi-dimensional heterogeneous material-containing composite layer may be provided as the outermost layer of the composite separator.

In the multi-dimensional heterogeneous material-containing composite layer, the one-dimensional inorganic material (B) is contained in an amount smaller than that of the inorganic particles or the particles including inorganic particles (A). For example, a content of the inorganic particles or the particles including inorganic particles (A) and a content of the one-dimensional inorganic material may be 50 to 99.9 wt% and 0.1 to 50 wt%, respectively, with respect to a total content of the multi-dimensional heterogeneous material-containing composite layer, and essentially, an organic binder may not be contained.

The inorganic particles may be formed of one or two or more selected from a metal oxide, a metal nitride, a metal carbide, a metal carbonate, a metal hydrate, and a metal carbonitride. For example, the inorganic particles may be formed of one or two or more selected from boehmite, $Al_2O_3$, $TiO_2$, $CeO_2$, MgO, NiO, $Y_2O_3$, CaO, $SrTiO_3$, $SnO_2$, ZnO, and $ZrO_2$, but are not limited thereto. A size of the inorganic particle may be 0.001 to 20 $\mu$m, but is not limited thereto. The shapes of the particles are not particularly limited, and examples thereof include a spherical shape, a square shape, an elliptical shape, a random shape, and a mixture thereof.

A content of the organic binder and a content of the inorganic particles may be 0.1 to 50 wt% and 50 to 99.9 wt%, respectively, with respect to a total content of the inorganic particle layer.

In the present disclosure, the multi-dimensional heterogeneous material-containing composite layer may further contain an organic binder. When the organic binder is contained, the content of the one-dimensional inorganic material may be 30 to 99.99 wt% with respect to 100 wt% of a total content of the one-dimensional inorganic material and the organic binder.

The one-dimensional inorganic material is not particularly limited as long as it is in the form of inorganic nanowires or inorganic nanofibers, and in the case of the inorganic nanowires, adhesive strength may be more significantly increased, or the inorganic nanowires may be bent.

The one-dimensional inorganic material is not limited, and may be, for example, in the form of nanowires or nanofibers having a diameter of 1 to 100 nm and a length of 0.01 to 100 $\mu$m. A material thereof may be one or two or more selected from a metal, carbon, a metal oxide, a metal nitride, a metal carbide, a metal carbonate, a metal hydrate, and a metal carbonitride. As a specific non-limiting example, the one-dimensional inorganic material may be in the form of nanowires or nanofibers formed of one or two or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$.

The one-dimensional inorganic material is not particularly limited as long as it is in the form of nanowires. For example, the wires may have a diameter of 1 to 100 nm, a length of 0.01 to 100 $\mu$m, and a length/diameter (L/D) of 100 to 20,000 without limitation, and independently may have a specific surface area of 50 to 4,000 $m^2/g$, but are not limited thereto.

The porous substrate is formed of an organic polymer and is not particularly limited as long as it has a porous property. Examples of the porous substrate include a polyolefin porous sheet or film, and may also include a woven fabric and a non-woven fabric. As a specific example, the porous substrate may be formed of one or more selected from the group consisting of high-density polyethylene, low-density polyethylene, linear low-density polyethylene, ultra-high molecular weight polyethylene, polypropylene, and copolymers thereof. In an exemplary embodiment, a thickness of the porous substrate may be 5 to 100 $\mu$m, a pore size of the porous substrate may be 0.001 to 10 $\mu$m, and a porosity of the porous substrate may be 5 to 95%.

In another general aspect, an electrochemical device includes a cathode, an anode, a separator, and an electrolyte solution, wherein the separator is the composite separator. Specifically, the electrochemical device may be a lithium secondary battery.

In an exemplary embodiment, a thickness of the composite separator is not particularly limited, and may be, for example, 5 to 200 $\mu$m, and more specifically, may be 5 to 100 $\mu$m, and a thickness of each of the inorganic particle layer and the multi-dimensional heterogeneous material-containing composite layer may be, but is not limited to, 0.1 to 50 $\mu$m, 0.5 to 10 $\mu$m, or 0.5 to 5 $\mu$m.

In an exemplary embodiment, a pore size of the composite separator is not particularly limited, and may be, for example, 0.001 to 10 $\mu$m, and a porosity of the composite separator may be 5 to 95%.

As set forth above, the separator according to an exemplary embodiment may prevent ignition or rupture of a battery caused by an abnormal phenomenon such as a rapid temperature rise because it has improved heat resistance.

In the related art, in a case where a polymer organic binder is not used, the inorganic particles are not dispersed without the polymer binder, and thus, an active layer is not produced using only the inorganic particles. In addition, even when a dispersion is prepared by applying an excessive energy to disperse inorganic particles, the adhesive force between the inorganic particles or between the inorganic particles and the porous substrate is not secured.

On the other hand, in an exemplary embodiment, it is confirmed that, in a case where the particles including inorganic particles are mixed with and dispersed together with the one-dimensional inorganic material, the inorganic particles are significantly well dispersed, and an adhesive force during coating is equal to or higher than that in the case of using the polymer organic binder, and even in a case where only inorganic particles and a one-dimensional inorganic material are used, an excellent adhesive property or an excellent adhesive property equal to or higher than that in the case of using the polymer organic binder as a binder is exhibited, and more excellent heat resistance is exhibited.

The composite separator according to an exemplary embodiment has a stacked structure obtained by stacking a porous substrate, an inorganic particle layer that is stacked on one or both surfaces of the porous substrate and contains inorganic particles or an organic binder, and a multi-dimensional heterogeneous material-containing composite layer obtained by coating a mixed slurry of inorganic particles or particles including inorganic particles and a one-dimensional inorganic material to an upper portion of the inorganic particle layer and performing drying, such that a battery that has a significantly increased adhesive strength between the respective layers, significantly excellent heat resistance, and improved electrical characteristics may be provided.

Further, the separator according to an exemplary embodiment may implement significantly excellent migration of ions by pores, may have no obstacle to the migration of ions such as lithium ions, may have almost no resistance increase rate, may rather reduce the resistance increase rate, and may improve electrical characteristics such as charge and discharge battery capacity and efficiency of a battery.

Further, an active layer formed of only an inorganic material may be achieved, and an adhesive force is sufficiently secured by the one-dimensional inorganic material in the form of nanowires.

Although it is not clear, it is considered that the effect of sufficiently increasing the adhesive force with a force such as van der Waals bonds due to an increase in surface area is achieved as the one-dimensional inorganic material is used. In addition, this is considered to be because the nanowires as the one-dimensional inorganic material are anchored and adhered to the porous substrate through the pores of the porous substrate, and fixation is implemented by entanglement and van der Waals bonds between the one-dimensional inorganic material and the particles.

## DETAILED DESCRIPTION OF EMBODIMENTS

Hereinafter, the present disclosure will be described in detail. However, each of the following exemplary embodiments is only a reference example for describing the present disclosure in detail, and the present disclosure is not limited thereto and may be implemented in various forms.

In addition, unless otherwise defined, all the technical terms and scientific terms used herein have the same meanings as commonly understood by those skilled in the art to which the present disclosure pertains. The terms used in the description of the present disclosure are merely used to effectively describe a specific exemplary embodiment, but are not intended to limit the present disclosure.

According to an exemplary embodiment, there is provided a composite separator including:

a porous substrate (a);
an inorganic particle layer (b) that is formed on one or both surfaces of the porous substrate and contains particles including inorganic particles and an organic binder; and
a multi-dimensional heterogeneous material-containing composite layer (c) that is formed on an upper surface of the inorganic particle layer and contains inorganic particles or particles including inorganic particles (A) and a one-dimensional inorganic material (B).

The multi-dimensional heterogeneous material-containing composite layer may be provided as the outermost layer of the composite separator.

In the multi-dimensional heterogeneous material-containing composite layer, the one-dimensional inorganic material (B) is contained in an amount smaller than that of the inorganic particles or the particles including inorganic particles (A). For example, a content of the inorganic particles or the particles including inorganic particles (A) and a content of the one-dimensional inorganic material may be 50 to 99.9 wt% and 0.1 to 50 wt%, respectively, with respect to the total content of the multi-dimensional heterogeneous material-containing composite layer, and essentially, an organic binder may not be contained.

In addition, according to an exemplary embodiment, there is provided a method of producing a porous composite separator, the method including: coating a dispersion (slurry) that contains inorganic particles or particles including inorganic particles and an organic binder to one or both surfaces of a porous substrate to form an inorganic particle layer; and coating a dispersion (slurry) that contains inorganic particles or particles including inorganic particles and a one-dimensional inorganic material to an upper portion of the inorganic particle layer to form a multi-dimensional heterogeneous material-containing composite layer.

The coating may be repeated two times or more. In addition, when forming the multi-dimensional heterogeneous material-containing composite layer, an organic binder may be further contained, if necessary.

In addition, in a case where the dispersion used to provide the composite layer is prepared by adding and dispersing the one-dimensional inorganic material in advance, and then adding the inorganic particles or the particles including inorganic particles, or by simultaneously adding the particles and the one-dimensional inorganic material, dispersibility of the inorganic particles or the particles including inorganic particles is excellent, such that a uniform coating layer may be formed. This is considered to be because the one-dimensional inorganic material plays a role in improving the dispersibility of the inorganic particles.

Further, according to an exemplary embodiment, there is provided an electrochemical device including the separator.

Hereinafter, the present disclosure will be described in detail.

According to an exemplary embodiment, the inorganic particle layer that contains inorganic particles or particles including inorganic particles and an organic binder is formed on one or both surfaces of the porous substrate, and the multi-dimensional heterogeneous material-containing composite layer that contains inorganic particles or particles including inorganic particles (A) and a one-dimensional inorganic material (B) is introduced onto an upper surface of the inorganic particle layer, such that the particles, and the composite layer or the inorganic particle layer and the porous substrate are firmly fixed by the one-dimensional inorganic material. Therefore, it is possible to provide a porous composite separator that may sufficiently maintain and increase adhesive strength, may further improve heat resistance, and may prevent ignition or rupture of a battery due to an abnormal phenomenon such as a rapid temperature rise in comparison to a separator including only a ceramic active layer that contains an organic binder and particles including ceramic particles such as inorganic particles according to the related art.

The composite separator according to an exemplary embodiment has a small or almost no resistance increase rate, and may implement a separator capable of improving electrical characteristics such as charge and discharge capacity and efficiency of a battery.

In addition, it is confirmed that the composite layer containing a one-dimensional inorganic material in the form of nanowires or nanofibers and inorganic particles is provided as the outermost layer of the porous active layer, such that an adhesive force between the inorganic particle layer and the porous substrate and an adhesive force between the inorganic particle layer and the composite layer are sufficiently secured by the one-dimensional inorganic material, impregnation with an electrolyte solution is increased, and heat resistance and chemical resistance are significantly increased.

Therefore, according to an exemplary embodiment, a novel porous composite separator capable of simultaneously exhibiting thermal stability, electrochemical stability, and excellent lithium ion conductivity is provided.

In addition, in the electrochemical device using the composite separator of an exemplary embodiment, the separator does not rupture inside the battery due to excessive conditions caused by internal or external factors such as high temperature, overcharging, and external impacts. Therefore, safety of the battery may be improved.

Hereinafter, each structure of the composite separator of an exemplary embodiment will be described.

As the porous substrate of an exemplary embodiment, a porous polymer film formed of a polymer, a sheet, a non-woven fabric, a woven fabric, and the like used as separators may be variously used, and a porous substrate having a stacked structure in which the layers are stacked in two or more layers may be used.

For example, when the porous substrate is a polyolefin-based porous film, the polyolefin-based porous film may be formed of low-density polyethylene, linear low-density polyethylene, high-density polyethylene, ultra-high molecular weight polyethylene, polypropylene, and copolymers thereof or derivatives thereof.

A thickness of the porous substrate is not particularly limited, and may be 1 to 100 $\mu$m, 5 to 60 $\mu$m, or 5 to 30 $\mu$m.

In addition, a pore size and a porosity of the porous substrate are not particularly limited, and the porosity may be 10 to 95%, and the pore size (diameter) may be 0.01 to 20 $\mu$m or 0.05 to 5 $\mu$m, but the present disclosure is not limited thereto.

The inorganic particle layer of an exemplary embodiment refers to a layer in which inorganic particles or particles including inorganic particles and a polymer binder as an organic binder are contained, a one-dimensional inorganic material is not used, and the inorganic particles are in contact with each other to be connected and fixed to each other by the polymer binder. A composition ratio of the particles to the organic binder may be a ratio of 50 to 99.9 wt%:50 to 0.1 wt% or 70 to 99.9 wt%:30 to 0.1 wt%, or a composition ratio of the inorganic particles to the organic binder may be a ratio of 90 to 99.9 wt%:10 to 0.1 wt%.

As the inorganic particle, it is more preferable to use a particle that does not undergo an oxidation or reduction reaction under battery operation conditions, and a particle having ion conductivity may also be used. As a non-limiting example, the inorganic particles may be formed of a mixture of one or two or more selected from boehmite, $Al_2O_3$, $TiO_2$, $CeO_2$, MgO, NiO, $Y_2O_3$, CaO, $SrTiO_3$, $SnO_2$, ZnO, $ZrO_2$, a lithium-based inorganic material, a piezoelectric inorganic metal compound, and composite metal oxides of these metals, but are not limited thereto. The inorganic particle is not limited as long as it does not significantly affect the performance of the battery due to electrochemical instability. A size of the inorganic particle or the particle including an inorganic particle is not limited, and may be, for example, 0.001 to 20 $\mu$m or 0.01 to 10 $\mu$m.

The organic binder may be used without limitation as long as it is an organic binder used for a separator in this field. The organic binder is not particularly limited, and examples thereof include polyvinyl alcohol, polyvinyl acetate, an ethylene vinyl acetate copolymer, polyethylene oxide, cellulose acetate, cellulose acetate butyrate, cellulose acetate propionate, polyvinylidene fluoride-hexafluoropropylene, polyvinylidene fluoride-trichloroethylene, polymethyl methacrylate, polyacrylonitrile, polyvinylpyrrolidone, cyanoethyl pullulan, cyanoethyl polyvinyl alcohol, cyanoethyl cellulose, cyanoethyl sucrose, pullulan, carboxymethyl cellulose, an acrylonitrile styrene butadiene copolymer, polyimide, or a mixture thereof. In addition, the organic binder may be used without particular limitation as long as it is used as a binder for a separator of a secondary battery.

Next, the multi-dimensional heterogeneous material-containing composite layer will be described.

In the multi-dimensional heterogeneous material-containing composite layer, the one-dimensional inorganic material (B) is contained in an amount smaller than that of the inorganic particles or the particles including inorganic particles (A). For example, a content of the inorganic particles or the particles including inorganic particles and a content of the one-dimensional inorganic material may be 50 to 99.9 wt% and 0.1 to 50 wt%, respectively, with respect to the total content of the multi-dimensional heterogeneous material-containing composite layer, and essentially, an organic binder may not be contained.

In an exemplary embodiment, the one-dimensional inorganic material is in the form of inorganic nanowires having a high surface area and a high length/diameter ratio, and secondary bonds such as van der Waals bonds may be formed between the inorganic particles or between the inorganic particles and the one-dimensional inorganic material by the high surface area and length/diameter ratio. In addition, entanglement between the nanowires of the one-dimensional inorganic material is generated, such that the inorganic particles are fixed by the entanglement, and the inorganic particles are anchored by penetrating into the inorganic particle layer or the porous substrate, which prevents separation between the respective components. Therefore, it is possible to provide a composite separator having a significantly excellent adhesive force.

In an exemplary embodiment, the one-dimensional inorganic material is not particularly limited as long as it is in the form of nanowires or nanofibers. For example, when the nanowires or the nanofibers have a diameter of 1 to 100 nm, a length of 0.01 to 100 $\mu$m, and a length/diameter (L/D) of 100 to 20,000 without limitation, and independently have a specific surface area of 50 to 4,000 $m^2/g$, the effect may be sufficiently exhibited, but since weak bonds may be formed depending on the purpose, the present disclosure is not limited thereto.

Therefore, the composite separator of an exemplary embodiment may prevent breakage or separation of the inorganic particles.

As the inorganic particles contained in the multi-dimensional heterogeneous material-containing composite layer, since the same inorganic particles as those of the inorganic particle layer are used, further description thereof will be omitted.

A content of the inorganic particles or the particles including inorganic particles and a composition ratio of the one-dimensional inorganic material in the composite layer are not particularly limited. For example, it is more preferable that the content of the inorganic particles or the particles including inorganic particles and the content of the one-dimensional inorganic material are 50 to 99.5 wt% and 50 to 0.1 wt%, respectively, with respect to the total weight of the composite layer, and the content of the inorganic particles or the particles including inorganic particles is 60 to 98 wt% with respect to the total weight of the composite layer.

The one-dimensional inorganic material is more preferable as the specific surface area thereof is increased. For example, in a case where the specific surface area is 50 to 4,000 $m^2/g$, when the specific surface area is 300 $m^2/g$ or more or 1,000 $m^2/g$ or more, physical bonds such as van der Waals bonds are increased according to the surface area, and thus, entanglement between the one-dimensional inorganic materials or between the inorganic particles and the one-dimensional inorganic material, entanglement between the one-dimensional inorganic material and the inorganic particle layer, and further, entanglement between the one-dimensional inorganic material and the porous substrate are generated. Therefore, the entanglement between the one-dimensional inorganic material and the substrate is effectively generated, such that physical bonds and chemical bonds may be more increased. As a result, an adhesive force may be increased.

The diameter of the one-dimensional inorganic material may be, for example, 1 to 100 nm, and the length/diameter (L/D) of the one-dimensional inorganic material may be 100 to 20,000 without limitation, but the present disclosure is not limited thereto.

The kind of the one-dimensional inorganic material is not particularly limited as long as it is chemically stable under battery operation conditions, and may be, for example, a nanowire or a nanofiber formed of one or two or more selected from a metal, carbon, a metal oxide, a metal nitride, a metal carbide, a metal carbonate, a metal hydrate, a metal carbonitride, a lithium-based inorganic material, a piezoelectric inorganic metal compound, and composite metal oxides of these metals. As a non-limiting example, the one-dimensional inorganic material may be one or two or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$.

In addition, the composite layer may further contain a polymer organic binder, if necessary, in addition to the one-dimensional inorganic material. The organic binder may be used without limitation as long as it is an organic binder commonly used for a separator. The organic binder is not particularly limited, and examples thereof include polyvinyl alcohol, polyvinyl acetate, an ethylene vinyl acetate copolymer, polyethylene oxide, cellulose acetate, cellulose acetate butyrate, cellulose acetate propionate, polyvinylidene fluoride-hexafluoropropylene, polyvinylidene fluoride-trichloroethylene, polymethyl methacrylate, polyacrylonitrile, polyvinylpyrrolidone, cyanoethyl pullulan, cyanoethyl polyvinyl alcohol, cyanoethyl cellulose, cyanoethyl sucrose, pullulan, carboxymethyl cellulose, an acrylonitrile styrene butadiene copolymer, polyimide, or a mixture thereof. In addition, the organic binder may be used without particular limitation as long as it is used as a binder for a separator of a secondary battery.

In a case where the polymer organic binder is further contained, the content of the one-dimensional inorganic material may be 30 to 99.99 wt% or 50 to 99.99 wt% with respect to 100 wt% of the total content of the one-dimensional inorganic material and the polymer organic binder.

A thickness of each of the inorganic particle layer and the composite layer in which a porous structure is formed by coating the dispersion to the porous substrate is not particularly limited, and is preferably 0.01 to 50 μm. In addition, a pore size and a porosity of each layer are not particularly limited as long as they may be obtained by the inorganic particles, the organic binder, and the one-dimensional inorganic material. For example, the pore size and the porosity are preferably 0.001 to 10 μm and 10 to 95%, respectively, but are not limited thereto.

A thickness of the composite separator of an exemplary embodiment is not particularly limited, and is preferably 1 to 100 μm and more preferably 1 to 30 μm, for example.

The composite layer and the inorganic particle layer may further contain other commonly known additives in addition to the components described above.

Hereinafter, a method of producing a separator of an exemplary embodiment will be described.

According to an exemplary embodiment, there is provided a method of producing a porous composite separator, the method including: coating a dispersion (slurry) that contains inorganic particles or particles including inorganic particles and an organic binder to one or both surfaces of a porous substrate to form an inorganic particle layer; and coating a dispersion (slurry) that contains inorganic particles or particles including inorganic particles and a one-dimensional inorganic material to an upper portion of the inorganic particle layer to form a multi-dimensional heterogeneous material-containing composite layer.

The coating may be repeated two times or more. In addition, when forming the multi-dimensional heterogeneous material-containing composite layer, an organic binder may be further contained, if necessary.

In addition, in a case where the dispersion used to provide the composite layer is prepared by adding and dispersing the one-dimensional inorganic material in advance, and then adding the inorganic particles or the particles including inorganic particles, or by simultaneously adding the particles and the one-dimensional inorganic material, dispersibility of the inorganic particles or the particles including inorganic particles is excellent, such that a uniform coating layer may be formed. This is considered to be because the one-dimensional inorganic material plays a role in improving the dispersibility of the inorganic particles.

In particular, it is appreciated that when preparing the slurry (dispersion) for forming the composite layer of an exemplary embodiment, in a case where the one-dimensional inorganic material is dispersed in advance or simultaneously dispersed together with the inorganic particles, the inorganic particles are significantly well dispersed.

That is, in an exemplary embodiment, it is appreciated that in a case where the inorganic particles or the particles including inorganic particles are dispersed, when the one-dimensional inorganic material in the form of inorganic nanowires is contained in a dispersion medium, the inorganic particles are significantly well dispersed as in a case of using a polymer organic binder, and in a case where an active layer is formed using the dispersion, even when the active layer is formed entirely of only inorganic materials, an adhesive force to the substrate and an adhesive force between the particles are significantly excellent.

Water may be mainly used as the dispersion, and as other dispersion media, lower alcohols such as ethanol, methanol, and propanol, solvents such as dimethylformamide (DMF), acetone, tetrahydrofuran, diethyl ether, methylene chloride, N-methyl-2-pyrrolidone, hexane, and cyclohexane, and a mixture thereof may be used, but the present disclosure is not limited thereto.

It is preferable that an aggregate of the inorganic particles in the dispersion used for the inorganic particle layer or the composite layer is crushed using a ball mill, a beads mill, a planetary mixer (grinding and mixing method through rotation and revolution), or the like, in order to achieve uniform dispersion. In this case, a crushing time is preferably 0.01 to 20 hours, and a particle size of the crushed inorganic particle is preferably 0.001 to 10 μm as described above, but the present disclosure is not limited thereto.

The dispersion prepared by the above method is coated onto the porous substrate or the inorganic particle layer, and drying is performed, such that a porous composite separator according to an exemplary embodiment may be obtained. The coating method is not particularly limited, and since the coating may be performed by various methods such as knife coating, roll coating, die coating, and dip coating, further description will be omitted.

The composite separator produced as described above of an exemplary embodiment may be used as an electrochemical device, for example, a separator of a lithium secondary battery. The electrochemical device is not particularly limited, and examples thereof include a primary battery, a second battery, a fuel cell, and a capacitor.

In a case where the composite separator of an exemplary embodiment is generally used in a battery, a general method of disposing and assembling an anode, a separator, and a cathode, and injecting an electrolyte solution is applied to complete manufacturing of a battery. Therefore, the manufacturing method will not be described in detail here.

A cathode active material of an exemplary embodiment is not particularly limited as long as it is a general cathode active material, and examples thereof include lithiated magnesium oxide, lithiated cobalt oxide, lithiated nickel oxide, and a composite oxide obtained by a combination thereof.

An anode active material is not particularly limited as long as it is a general anode active material, and non-limiting examples thereof include carbon-based materials such as a lithium metal, activated carbon, and graphite, but are not particularly limited thereto.

The cathode active material and the anode active material are bonded to a cathode current collector and an anode current collector, respectively. An aluminum foil, a nickel foil, or the like may be used as the cathode current collector. The anode current collector is selected from copper, nickel, and the like, but is not limited thereto as long as it is generally used. Therefore, the present disclosure is not limited thereto.

The electrolyte solution to be used in an exemplary embodiment is also not limited as long as it is used in this field. Therefore, the electrolyte solution will not be further described in the present disclosure.

Hereinafter, preferred Examples are provided to assist in understanding the present disclosure, but each of the following Examples is merely an example, and the scope of the present disclosure is not limited to the following Examples.

**Evaluation of Physical Properties**

1. Evaluation of Peeling Force

A peeling strength between a porous substrate and a porous active layer was measured by a 180° test method (ASTM D903) using a tensile tester (3343) manufactured by Instron Corporation.

2. Evaluation of Thermal Shrinkage Rate

A 10 cm (length) × 10 cm (width) separator was left at each of 150°C, 160°C, and 170°C, for 1 hour, a reduction rate in area was measured, and a thermal shrinkage rate was determined. The thermal shrinkage rate was evaluated by calculation according to the following Equation 1.

```
[Equation 1]

Thermal shrinkage rate (%) = ((Length before heating – Length after

heating)/Length before heating) x 100
```

3. Gurley Permeability

A gas permeability was measured by a Gurley permeability. The Gurley permeability was measured using a densometer manufactured by Toyo Seiki Seisaku-sho, Ltd. according to the ASTM D726 standard. The times taken for 100 cc of air to pass through an area of 1 square inch of the separator were recorded in seconds and compared with each other. The Gurley permeability was calculated according to Equation 2. The results of the Gurley permeability are shown in Table 1.

[Equation 2]

ΔGurley permeability (sec) = Gas permeability of separator in which porous active layer is formed - Gas permeability of porous substrate

4. Measurement of Electrochemical Characteristics of Battery

An impedance of each of the batteries manufactured through each assembling process was measured using a charge/discharge cycle device by the following method. The results thereof are shown in Table 1.

While maintaining a temperature of a chamber at room temperature (25°C) using a device, the battery was charged at a constant current-constant voltage (CC-CV) of 4.2 V and then was discharged to 2.5 V by a method of measuring a lifespan and resistance at room temperature. The charging and discharging were measured by performing 0.5 C charging and 0.5 C discharging from 4.2 V to 2.5 V 20 times. An average value of DC-IR impedance values of each cycle during the charging and discharging process was measured. A resistance increase rate was calculated according to Equation 3. The results of the resistance increase rate are shown in Table 1.

```
[Equation 3]

Resistance increase rate (%) = ((Resistance of separator including

coating layer – Resistance of PE film)/Resistance of PE film) x 100
```

[Example 1]

1) Production of Composite Separator

96 wt% of boehmite particles having an average particle diameter of 400 nm and 4 wt% of polyvinyl alcohol as an organic binder were added to water to prepare a dispersion (1) having a solid content of 15 wt%.

92 wt% of boehmite particles having an average particle diameter of 400 nm and 8 wt% of boehmite nanowires having an average diameter of 5 nm and a length of 1.5 μm were added to water to prepare a dispersion (2) having a solid content of 15 wt%.

The prepared dispersion (1) was coated to one surface of a polyethylene film having a thickness of 9 μm (porosity of 41%) to a thickness of 1 μm using a slot die to form an inorganic particle layer, the dispersion (2) was coated to the inorganic particle layer to a thickness of 0.5 μm using the slot die, and drying was performed, thereby forming an composite layer. A total coating thickness of the porous coating layer was 1.5 μm.

The results of analysis of the thickness, the thermal shrinkage rate, the change in Gurley permeability, the peeling force, the resistance, and the resistance increase rate obtained using the produced composite separator are shown in Table 1.

2) Manufacturing of Lithium Secondary Battery

**<Production of Cathode>**

94 wt% of LiCoO$_2$ as a cathode active material, 2.5 wt% of polyvinylidene fluoride as an adhesive, and 3.5 wt% of carbon black as a conductive agent were added to N-methyl-2-pyrrolidone (NMP), which was a solvent, and stirring was performed to prepare a uniform cathode slurry. The slurry was coated onto an aluminum foil having a thickness of 30 μm, drying was performed at a temperature of 120°C, and compression was performed, thereby producing a cathode plate having a thickness of 150 μm.

**<Production of Anode>**

95 wt% of artificial graphite as an anode active material, 3 wt% of acrylic latex (trade name: BM900B, solid content: 20 wt%) having a T$_g$ of -52°C as an adhesive, and 2 wt% of carboxymethyl cellulose (CMC) as a thickener were added to water, which was a solvent, and stirring was performed to prepare a uniform anode slurry. The slurry was coated onto a copper foil having a thickness of 20 μm, drying was performed at a temperature of 120°C, and compression was performed, thereby producing an anode plate having a thickness of 150 μm.

**\<Manufacturing of Battery\>**

[Example 2]

88 wt% of boehmite particles having an average particle diameter of 400 nm, 8 wt% of boehmite nanowires having an average diameter of 5 nm and a length of 1.5 $\mu$m, and 4 wt% of polyvinyl alcohol as an organic binder were added to water to prepare a dispersion (3) having a solid content of 15 wt%.

The prepared dispersion (1) was coated to one surface of a polyethylene film having a thickness of 9 $\mu$m (porosity of 41%) to a thickness of 1 $\mu$m using a slot die to form an inorganic particle layer, the dispersion (3) was coated to the inorganic particle layer to a thickness of 0.5 $\mu$m using the slot die, and drying was performed, thereby forming an composite layer. In addition, a battery was manufactured in the same manner as that of Example 1 using the characteristics of the produced composite separator and the composite separator. The results of measuring electrical characteristics are shown in Table 1.

[Comparative Example 1]

Comparative Example 1 was performed in the same manner as described above, except that only the dispersion (1) produced in Example 1 was coated to one surface of a polyethylene film having a thickness of 9 $\mu$m (porosity of 41%) to a thickness of 1.5 $\mu$m using a slot die, and drying was performed. The results are shown in Table 1.

[Table 1]

| | Physical properties of separator | | | | | | | | Battery | | |
|---|---|---|---|---|---|---|---|---|---|---|---|
| | Thickness of active layer | Thermal shrinkage rate (%) | | | | | ΔGurley permeability | Peeling force | Resistance (mΩ) | | Resistance increase rate |
| | | 120 °C | 130 °C | 150 °C | 160 °C | 170 °C | | | Average | Standard deviation | |
| | μm | | | | | | sec/100cc | gf/25 mm | | | % |
| Example 1 | 3 | 0.2 | 0.5 | 2.3 | 2.4 | 2.4 | 47 | 90 | 1303 | 12 | -2.0 |
| Example 2 | 3 | 0.2 | 0.5 | 2.4 | 2.4 | 2.5 | 57 | 132 | 1343 | 11 | 1.0 |
| Comparativ e Example 1 | 3 | 0.8 | 4.9 | 19. 2 | - | - | 35 | 29 | 1329 | 28 | 0 |

As shown in Table 1, it was confirmed that in Examples 1 and 2, the heat resistance was excellent and the increase in Gurley permeability was small due to a significantly low thermal shrinkage rate, and the adhesive property was excellent due to a high peeling force.

In addition, it was appreciated that the resistance of the battery was low, the standard deviation was low, and the resistance increase rate was low. In addition, in the case of Example 2 in which the organic binder and the one-dimensional inorganic material were used together, the adhesive force was increased by two times or more.

Therefore, when the composite separator in which the heat-resistant porous structure having a micro unit was formed was adopted according to the present disclosure, all of the thermal and electrochemical stability and the performance of the battery were significantly improved.

**Claims**

1. A composite separator comprising:

   a porous substrate (a);
   an inorganic particle layer (b) that is formed on one or both surfaces of the porous substrate and contains particles including inorganic particles and an organic binder; and
   a multi-dimensional heterogeneous material-containing composite layer (c) that is formed on an upper surface of the inorganic particle layer and contains inorganic particles or particles including inorganic particles (A) and a one-dimensional inorganic material (B).

2. The composite separator of claim 1,
   wherein the multi-dimensional heterogeneous material-containing composite layer is provided as the outermost layer of the composite separator.

3. The composite separator of claim 1,
   wherein in the multi-dimensional heterogeneous material-containing composite layer, the one-dimensional inorganic material (B) is contained in an amount smaller than that of the inorganic particles or the particles including inorganic particles (A).

4. The composite separator of claim 3,
   wherein a content of the inorganic particles or the particles including inorganic particles (A) and a content of the one-dimensional inorganic material (B) are 50 to 99.9 wt% and 0.1 to 50 wt%, respectively, with respect to a total content of the multi-dimensional heterogeneous material-containing composite layer, and an organic binder is not contained in the multi-dimensional heterogeneous material-containing composite layer.

5. The composite separator of claim 1,
   wherein the inorganic particles comprise one or two or more selected from a metal oxide, a metal nitride, a metal carbide, a metal carbonate, a metal hydrate, and a metal carbonitride.

6. The composite separator of claim 1,
   wherein a content of the organic binder and a content of the inorganic particles are 0.1 to 50 wt% and 50 to 99.9 wt%, respectively, with respect to a total content of the inorganic particle layer.

7. The composite separator of claim 1,
   wherein the multi-dimensional heterogeneous material-containing composite layer further contains an organic binder.

8. The composite separator of claim 7,
   wherein in the multi-dimensional heterogeneous material-containing composite layer, a content of the one-dimensional inorganic material is 30 to 99.99 wt% with respect to 100 wt% of a total content of the one-dimensional inorganic material and the organic binder.

9. The composite separator of claim 1,
   wherein the one-dimensional inorganic material has a diameter of 1 to 100 nm and a length of 0.01 to 100 μm, and is in the form of nanowires.

10. The composite separator of claim 9,

wherein the one-dimensional inorganic material is a nanowire or a nanofiber formed of one or two or more selected from a metal, carbon, a metal oxide, a metal nitride, a metal carbide, a metal carbonate, a metal hydrate, and a metal carbonitride.

11. The composite separator of claim 1,
wherein the porous substrate is formed of one or more selected from the group consisting of high-density polyethylene, low-density polyethylene, linear low-density polyethylene, ultra-high molecular weight polyethylene, polypropylene, and copolymers thereof.

12. An electrochemical device comprising a cathode, an anode, a separator, and an electrolyte solution,
wherein the separator is the composite separator of any one of claims 1 to 11.

13. The electrochemical device of claim 12,
wherein the electrochemical device is a lithium secondary battery.

14. A method of producing a porous composite separator, the method comprising:

coating a dispersion (slurry) that contains inorganic particles or particles including inorganic particles and an organic binder to one or both surfaces of a porous substrate to form an inorganic particle layer; and
coating a dispersion (slurry) that contains inorganic particles or particles including inorganic particles and a one-dimensional inorganic material to an upper portion of the inorganic particle layer to form a multi-dimensional heterogeneous material-containing composite layer.

15. The method of claim 14,
wherein the dispersion (slurry) that contains the inorganic particles or the particles including inorganic particles and the one-dimensional inorganic material further contains an organic binder.

**EUROPEAN SEARCH REPORT**

Application Number

EP 22 16 2587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2013 037854 A (UNIV SHINSHU; TOPTEC CO LTD) 21 February 2013 (2013-02-21) * abstract and figures 5(a) and (b) * ----- | 1-15 | INV. H01M50/446 H01M50/449 H01M50/451 H01M50/457 |

TECHNICAL FIELDS SEARCHED (IPC)

H01M

The present search report has been drawn up for all claims

| Place of search | Date of completion of the search | Examiner |
|---|---|---|
| Munich | 2 August 2022 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

# EP 4 064 445 A1

## ANNEX TO THE EUROPEAN SEARCH REPORT
## ON EUROPEAN PATENT APPLICATION NO.

EP 22 16 2587

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2022

| Patent document cited in search report | | Publication date | Patent family member(s) | | Publication date |
|---|---|---|---|---|---|
| JP 2013037854 | A | 21-02-2013 | JP | 2013037854 A | 21-02-2013 |
| | | | KR | 101213567 B1 | 18-12-2012 |

For more details about this annex : see Official Journal of the European Patent Office, No. 12/82

EPO FORM P0459

15